(19) Europäisches Patentamt
European Patent Office
Office européen des brevets

(11) EP 4 700 064 A1

(12) EUROPEAN PATENT APPLICATION

(43) Date of publication:
25.02.2026 Bulletin 2026/09

(51) International Patent Classification (IPC):
C08G 69/26 (2006.01)        C08G 69/36 (2006.01)
C08G 69/40 (2006.01)        C08L 77/02 (2006.01)
C08L 77/06 (2006.01)        C08G 69/28 (2006.01)

(21) Application number: 24306370.8

(22) Date of filing: 19.08.2024

(52) Cooperative Patent Classification (CPC):
(C-Sets available)
C08G 69/36; C08G 69/26; C08G 69/265;
C08G 69/28; C08G 69/40; C08L 77/02; C08L 77/06
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ARKEMA FRANCE
92800 Puteaux (FR)

(72) Inventors:
• YE, Wen
CHANGSHU, 215522 (CN)
• WERTH, Michael, Robert
SERQUIGNY 27470 (FR)
• WANG, Miao
117528 SINGAPORE (SG)

(74) Representative: Arkema Patent
Arkema France
DRD-DPI
51, Esplanade du Général de Gaulle
CS 10478
92907 Paris La Défense Cedex (FR)

(54) **AMORPHOUS COPOLYAMIDES OBTAINED FROM 2,5-FURANDICARBOXYLIC ACID**

(57) The present invention relates to an amorphous copolyamide comprising the repeating units of general formula (I):

$$X_1F / X_1Y_1 \qquad (I)$$

wherein $X_1F$ is a repeating unit obtained from the polycondensation of a diamine $X_1$ with 4 to 18 carbon atoms and of F representing 2,5-furandicarboxylic acid,
$X_1Y_1$ is a repeating unit obtained from the polycondensation of the diamine $X_1$ and of a diacid $Y_1$ with 4 to 18 carbon atoms,
the copolyamide having an inherent viscosity of more than 0,85 g/dl, preferably more than 0,90 g/dl, and most preferably of more than 0,95 g/dl,
the copolyamide having a glass transition temperature of between 115°C and 170°C.

Fig. 1

EP 4 700 064 A1

(52)  Cooperative Patent Classification (CPC): (Cont.)

C-Sets
**C08G 69/26, C08G 69/28, C08L 77/06**

**Description**

**Technical field**

The present invention relates to an amorphous copolyamide obtained from 2,5-furandicarboxylic acid, and to a process for the manufacture thereof. It also relates to the use of said amorphous copolyamide for the manufacture of transparent articles, in particular optical articles, notably by injection molding.

**Background art**

In view of increasing concerns about the availability and use of fossil resources, and in response to a strong market drive, a strong interest has been devoted to the development of bio-based materials from renewable resources, notably from biomass, and particularly from fructose.

In that framework, 2,5-furandicarboxylic acid (FDCA) has been assessed to be among the most viable bio-based building blocks for replacing phthalic acids in the production of semi-aromatic polymers.

FDCA based polyamides have drawn particular interest. However, the low thermal stability of FDCA renders its use in melt polycondensation processes difficult.

To solve the problem of thermal decomposition of FDCA during melt polycondensation patent US 9,938,376 proposes to prepare first a macro-diamine in a solvent, typically an alcohol, starting from the FDCA diester. In a further step, the macro-diamine is reacted in a polar aprotic solvent with an acid dichloride and a tertiary amine as acid scavenger. The resulting polyamide has an inherent viscosity of 0,83, a number average molecular weight determined by GPC of 7101 and an associated polydispersity index of 5.28, a glass transition temperature of 136°C and no melting temperature. The material properties obtained are not satisfactory considering the low molecular weight and high polydispersity. Furthermore, the use of aprotic solvents and acid chlorides makes this process very expensive.

Patent application US 2018/371167 discloses a process also starting with the synthesis of ta precursor oligomer from the FDCA diester and a diamine in methanol, followed by a melt polycondensation optionally a solid-state polycondensation as a finishing step. Typical polyamides presented are PA 10F and PA MXDF. Only polyamides obtained with a solid-state polymerization step achieve higher molecular weights (Mn > 9000 g/mol). However, these polyamides display a high polydispersity, indicating a high level of branching. These polyamides further possess low levels of crystallization.

None of these documents disclose amorphous FDCA based polyamides with high molecular weight. Only polyamides with sufficiently high molecular weight deliver sufficient mechanical properties of objects made thereof.

**Summary of the invention**

The invention thus has the aim to propose an amorphous polyamide obtained from biobased FDCA with a high molecular weight.

Accordingly, a first aspect of the present invention is an amorphous copolyamide comprising the repeating units of general formula (I) : $X_1F$ / $X_1Y_1$ (I))

wherein $X_1F$ is a repeating unit obtained from the polycondensation of a diamine $X_1$ with 4 to 18 carbon atoms and of F representing 2,5-furandicarboxylic acid,

$X_1Y_1$ is a repeating unit obtained from the polycondensation of the diamine $X_1$ and of a diacid $Y_1$ with 4 to 18 carbon atoms,

the copolyamide having an inherent viscosity of more than 0,85 g/dl, preferably more than 0,90 g/dl and most preferably more than 0,95 g/dl measured according to ISO 307:2019 using an Ubbelohde viscosimeter, modified in that the concentration is 0,5 wt.% in m-cresol as a solvent and the temperature is 20°C,

the copolyamide having a glass transition temperature of between 115°C and 170°C measured by differential scanning calorimetry (DSC) following ISO 11357- 2 :2020 with a heating rate of 20°C/min.

The purpose of this invention is to propose amorphous FDCA-based copolyamides having a high glass transition temperature and high molecular weight, notably for use as amorphous engineering resins.

Other characteristics of the invention are specified below:

- In the copolyamide, the diamine $X_1$ represents a diamine comprising 4 to 18 carbon atoms based on a linear alkyl, branched alkyl or cycloaliphatic structure, and more preferably, $X_1$ represents a cycloaliphatic diamine comprising 5 to 18 carbon atoms.
- In the copolyamide, the diacid $Y_1$ is chosen in the group consisting of malonic acid, adipic acid, succinic acid, glutaric acid, 2,2-dimethyl-glutaric acid, 2,4,4-trimethyladipic acid, pimelic acid, suberic acid, azelaic acid, sebacic acid, undecanedioic acid, dodecanedioic acid, tetradecanedioic acid, cyclohexane-1,4-dicarboxylic acid, cyclohexane-1,3-dicarboxylic acid, isophthalic acid, terephthalic acid, 2,6-naphthalenedicarboxylic acid and phthalic acid.

- The copolyamide comprises at least one additional unit Z obtained from the polycondensation of a lactam or an aminocarboxylic acid.

- In the copolyamide, Z is a lactam or an aminocarboxylic acid chosen in the group consisting of 6-aminohexanoic acid, 9-aminononanoic acid, 10-aminodecanoic acid, 10-aminoundecanoic acid, 12-aminododecanoic acid and 11-aminoundecanoic acid and its derivatives, caprolactam, decanolactam, undecanolactam and lauryllactam.

- The copolyamide comprises at least one additional unit $X_aY_a$, which is a repeating unit obtained from the polycondensation of a diamine $X_a$ with 4 to 18 carbon atoms and of a diacid $Y_a$ with 4 to 18 carbon atoms, the unit $X_aY_a$ being different from $X_1F$ and $X_1Y_1$.

- In the copolyamide, the diamine $X_a$ is chosen among the diamines defined for $X_1$ and the diacid $Y_a$ is chosen among the diacids defined for $Y_1$.

- In the copolyamide, at least one of $X_1$ and $X_a$ is chosen in the group consisting of isophorone diamine, 1,3-diaminocyclohexane, 1,4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"), or one or more aromatic diamines chosen in the group consisting of m-xylylene diamine (MXDA) and p-xylylene diamine (PXDA).

- The copolyamide has an index of polydispersity Ip, as determined by SEC, of less than to 3,2, more preferably less than 2,8 and most preferably less than 2,6.

The invention also concerns a process for the manufacture of an amorphous copolyamide as defined above, comprising the steps of:

(a) mixing at least one diamine $X_1$ as defined in claims 1 and 2 with at least one diester of furandicarboxylic acid B to form a reaction mixture, the molar ratio between the diamine component $X_1$ and the diester component B in the reaction mixture being of 1,1 or more;
(b) heating the reaction mixture obtained in step (a) to a temperature between 80 and 240°C to form an amine end-capped oligomer by melt polycondensation; and
(c) polymerizing the amine end-capped oligomer obtained in step (b) with at least one dicarboxylic acid $Y_1$ and optionally further monomers Z, $Y_a$ and/or $Y_a$ to form the copolyamide as defined above.

In the process, the diester of 2,5- furandicarboxylic acid B is preferably chosen in the group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

The invention further concerns a composition comprising at least one copolyamide as defined above and from 0 to 5% by weight, preferably from 0.2% to 4% by weight based on the total weight of the composition of at least one additive.

The invention also concerns a molded article made of the copolyamide of the invention or made of the composition of the invention.

The molded article is preferably a part of an optical equipment such as a filter, a lens, preferably an ophthalmic lens, a spectacle frame, an element with a spectral filter effect, a spectacle lens, a sunglass lens, an optical lens, an optical filter, an inspection lens; a part of sports equipment such as goggles, notably sports or ski goggles, sports shoes, golf equipment; a part of security equipment such as a visor, safety glasses, a part of electronic equipment such as storage media, optical recording systems, flow meter, displays, optical data storage, measuring devices, infrared keys, mobile phones, notably a mobile phone case, transportable recording devices, personal digital assistants; a housing or part thereof; a window in buildings or vehicles; a decorative element; a structural element; a part of a toy; a part of a cover or a covering; a part of a packaging; or a part of a plating.

The claimed invention finally also concerns the use of the copolyamide defined above or the composition defined above as injection molding material.

## Description of the figure

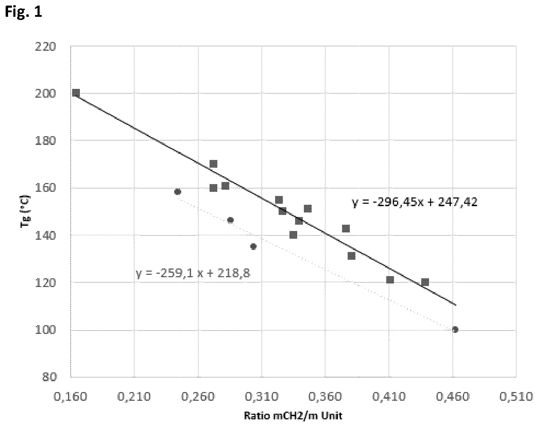

[Fig. 1] is a graph showing the relationship between chain flexibility of the copolyamides and their glass transition temperature.

## Detailed description

**Definitions**

Within the present application, the term "amorphous copolyamide" is intended to mean a copolyamide that has no or only a very low, hardly detectable, heat of fusion. Such amorphous copolyamide exhibits in dynamic differential calorimetry (DSC) according to ISO 11357 - 3 (2018) at a heating rate of 20 °C/min, a heat of fusion of less than 5 J/g, particularly less than 3 J/g, and more preferably between 0 and 1 J/g.

The nomenclature used in the following for the polyamides and copolyamides is well known by the skilled person and described in ISO 1874-1:2011 « Plastics-Polyamide (PA) Moulding And Extrusion Materials - Part 1: Designation System and Basis for Specification ».

**The copolyamide**

The invention concerns an amorphous copolyamide comprising the repeating units of general formula (I) :

$$X_1F / X_1Y_1 \qquad (I)$$

wherein:

- $X_1F$ is a repeating unit obtained by polycondensation of a diamine $X_1$ with 4 to 18 carbon atoms with F representing 2,5-furandicarboxylic acid, and
- $X_1Y_1$ is a repeating unit obtained from the polycondensation of the diamine $X_1$ and of a diacid $Y_1$ with 4 to 18 carbon atoms.

Preferably, $X_1$ represents a diamine comprising 4 to 18 carbon atoms based on a linear alkyl, branched alkyl or cycloaliphatic structure, and more preferably, $X_1$ represents a cycloaliphatic diamine comprising 5 to 18 carbon atoms.

Advantageously, $X_1$ is well suited for polycondensation reactions at temperatures between 250 and 300°C. It is chosen in the group consisting of 1,4-diamino-butane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 2-methyl-1,5-diaminopentane, hexamethylenediamine, 3-methylhexamethylenediamine, 1,6-diamino-2,5-dimethylhexane, 1,6-diamino-2,4-dimethylhexane, 1,6-diamino-3,3-dimethylhexane, 1,6-diamino-2,2-dimethylhexane, 1,7-diaminoheptane, 1,8-diaminooctane, 2,2,4-trimethyl-hexamethylenediamine, 2,4,4-trimethyl-hexamethylenediamine, 2-ethyl-1,7-diaminoheptane, 2-methyl-1,8-diaminooctane, 1,9-diaminononane, 2-methyl-1,8-diaminooctane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 5-methyl-1,9-diaminononane, 1,8-diamino-1,3-dimethyloctane, 1,8-diamino-2,4-dimethyloctane, 1,8-diamino-3,4-dimethyloctane, 1,8-diamino-4,5-dimethyloctane, 1,8- diamino-1,4-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,1,9-diamino-5-methylnonane, 11-diaminoundecane, 1,12-diaminododecane, and 2,2,7,7-tetramethyl-octanediamine ; or one or more cycloaliphatic diamines chosen in the group consisting of isophorone diamine, 1,3-diaminocyclohexane, 1,4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"), or one or more aromatic diamines chosen in the group consisting of m-xylylene diamine (MXDA) and p-xylylene diamine (PXDA).

Preferably, $Y_1$ represents a diacid with 4 to 12 carbon atoms. The diacid may be in particular an aliphatic diacid, notably a linear or branched aliphatic diacid, or a cycloaliphatic or aromatic diacid. Preferably, $Y_1$ is a diacid that has a sufficient thermal stability to react at temperatures between 250 and 300°C with negligeable degradation.

Advantageously, $Y_1$ represents a diacid chosen in the group consisting of malonic acid, adipic acid, succinic acid, glutaric acid, 2,2-dimethyl-glutaric acid, 2,4,4-trimethyladipic acid, pimelic acid, suberic acid, azelaic acid, sebacic acid, undecanedioic acid, dodecanedioic acid, cyclohexane-1,4-dicarboxylic acid, cyclohexane-1,3-dicarboxylic acid, isophthalic acid, terephthalic acid, 2,6-naphthalenedicarboxylic acid and phthalic acid. Most preferentially, $Y_1$ is isophthalic acid.

Optionally, the copolyamide of the invention may comprise one or more additional repeating unit. This unit may be obtained by polycondensation of a lactam or an aminocarboxylic acid, represented by formula Z, or by polycondensation of a diamine $X_a$, and a diacid $Y_a$, the repeating unit being represented by the formula $X_aY_a$.

Preferably, $X_a$ represents a diamine comprising 4 to 18 carbon, preferably a linear or branched aliphatic diamine or a cycloaliphatic diamine, more preferably, $X_a$ represents a cycloaliphatic diamine comprising 5 to 18 carbon atoms.

Advantageously, $X_a$ is chosen in the group consisting of 1,4-diamino-butane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane,

**EP 4 700 064 A1**

1,4-diamino-1,4-dimethylbutane, 1,4-diamino-2,3-dimethylbutane, 1,2-diamino-1-butylethane, 2-methyl-1,5-diaminopentane, hexamethylenediamine, 3-methylhexamethylenediamine, 1,6-diamino-2,5-dimethylhexane, 1,6-diamino-2,4-dimethylhexane, 1,6-diamino-3,3-dimethylhexane, 1,6-diamino-2,2-dimethylhexane, 1,7-diaminoheptane, 1,8-diaminooctane, 2,2,4-trimethyl-hexamethylenediamine, 2,4,4-trimethyl-hexamethylenediamine, 2-ethyl-1,7-diaminoheptane, 2-methyl-1,8-diaminooctane, 1,9-diaminononane, 2-methyl-1,8-diaminooctane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 5-methyl-1,9-diaminononane, 1,8-diamino-1,3-dimethyloctane, 1,8-diamino-2,4-dimethyloctane, 1,8-diamino-3,4-dimethyloctane, 1,8-diamino-4,5-dimethyloctane, 1,8- diamino-1,4-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,1,9-diamino-5-methylnonane, 11-diaminoundecane, 1,12-diaminododecane, and 2,2,7,7-tetramethyl-octanediamine ; or one or more cycloaliphatic diamines chosen in the group consisting of isophorone diamine, 1,3-diaminocyclohexane, 1,4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"), or one or more aromatic diamines chosen in the group consisting of m-xylylene diamine (MXDA) and p-xylylene diamine (PXDA).

Preferably, $Y_a$ represents a diacid with 4 to 12 carbon atoms, preferably a linear or branched aliphatic diacid, or a cycloaliphatic or aromatic diacid.

Advantageously, $Y_a$ represents a diacid chosen in the group consisting of malonic acid, adipic acid, succinic acid, glutaric acid, 2,2-dimethyl-glutaric acid, 2,4,4-trimethyladipic acid, pimelic acid, suberic acid, azelaic acid, sebacic acid, undecanedioic acid, dodecanedioic acid, cyclohexane-1,4-dicarboxylic acid, cyclohexane-1,3-dicarboxylic acid, isophthalic acid, terephthalic acid, 2,6-naphthalenedicarboxylic acid and phthalic acid.

By definition, the unit $X_aY_a$ is different from the unit $X_1F$ and different from the unit $X_1Y_1$.

Preferably, at least one of $X_1$ and $X_a$ is chosen in the group consisting of isophorone diamine, 1,3-diaminocyclohexane, 1, 4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"), or one or more aromatic diamines chosen in the group consisting of m-xylylene diamine (MXDA) and p-xylylene diamine (PXDA).

The copolyamide of the invention may comprise one or more, in particular two or three different additional units $X_aY_a$.

In other words, when the copolyamide comprises a repeating unit Z, the copolyamide is of formula (II):

$$X_1F \ / \ X_1Y_1/Z \qquad (II)$$

When the copolyamide comprises a repeating unit $X_aY_a$, the copolyamide is of formula (IV):

$$X_1F \ / \ X_1Y_1/ \ X_aY_a \qquad (III)$$

When the copolyamide comprises two different repeating units $X_aY_a$, the copolyamide is of formula (IV):

$$X_1F \ / \ X_1Y_1/ \ X_aY_a/X_bX_b \qquad (IV)$$

When the copolyamide comprises a repeating unit $X_aY_a$ and a repeating unit Z, the copolyamide is of formula (V):

$$X_1F \ / \ X_1Y_1/ \ X_aY_a \ /Z \qquad (V)$$

The copolyamide of the invention has a glass transition temperature Tg from 115°C to 170°C, preferably from 130°C to 170°C, as measured by differential scanning calorimetry (DSC) following ISO 11357 - 1 :2020 with a heating rate of 20°C/min.

The desired glass transition temperature can be obtained by a suitable choice of comonomers. In this respect it is helpful to differentiate between "flexible" monomers, monomers which have a high degree of freedom to arrange in different conformations, and "rigid" monomers which have little or no conformational freedom. "Flexible" monomers in polymers contain mostly methylene units. Therefore, it is possible to create an empirical relationship between the weighted molar mass of "flexible" CH2 units in a copolymer with the weighted total global weight of its units. This approach may be used for estimating macromolecular properties (see e.g. "Properties of polymers, their correlation with chemical structure, their numerical estimation and prediction from additive group contributions" by van Krevelen and Nijenhuis, Elsevier 2009).

Using this approach, we obtain two relationships useful to elaborate compositions fulfilling the desired result of a given glass transition temperature. For copolyamides containing only monomers with one cyclic 6-ring structure (i.e. for example isophthalic acid, 2,4-furane dicarboxylic acid or 1,4-bis(aminomethyl) cyclohexane), we obtain the following approximative relationship:

$$T_g = -259{,}1 \times \frac{m_{CH2}}{m_{Unit}} + 218{,}8$$

For copolyamides containing at least two cyclic 6-ring structures and in addition a other bicyclic structured monomers (i.e. bis(4-amino-3-methylcyclohexyl) methane ("BMACM" or "B") and bis(4-aminocyclohexyl) methane), we find the following relationship:

$$T_g = -296{,}5 \times \frac{m_{CH2}}{m_{Unit}} + 247{,}4$$

These two relationships are illustrated in Fig. 1.

The copolyamide of the invention has a molecular weight, expressed by an inherent viscosity, determined as indicated in ISO 307:2019 using an Ubbelohde viscosimeter, modified in that the concentration is 0,5 wt.% in m-cresol as a solvent and the temperature is 20°C, of more than 0,85 g/dl, preferably more than 0,90 g/dl and most preferably more than 0,95 g/dl.

Preferably, the copolyamide of the invention has a polydispersity index PDI, as determined by GPC, of less than 3,2, more preferably less than 2,8 and most preferably less than 2,6.

The copolyamide of the invention further preferably has a weight average molecular weight Mw of 30,000 to 150,000, preferably 35,000 to 100,000 g/mol.

Particular interesting embodiments of the invention are the copolyamides as described in the following.

According to an embodiment, the copolyamide is of formula (VI):

$$X_1F / X_1Y_1 / BY_1 \qquad (VI)$$

wherein:

X$_1$ is an aliphatic linear diamine, preferably with 6 to 12 carbon atoms;
F is furane dicarboxylic acid;
Y$_1$ is a dicarboxylic acid chosen in the list above; and
B is an alicyclic diamine, in particular BMACM or PACM.

Preferably, the copolyamide comprises 40 to 70 mol% of repeating unit X$_1$F, 10 to 25 mol % of repeating unit X$_1$Y$_1$, and 5 to 40 mol% of repeating unit BY$_1$.

According to a second embodiment, the copolyamide is of formula (VII):

$$BACF / BACY_1 / Z \qquad (VII)$$

wherein:

BAC is the alicyclic diamine 1,3-BAC;
F is furane dicarboxylic acid;
Y$_1$ is a dicarboxylic acid chosen in the list above, preferably with 6 to 12 carbon atoms; and
Z is a lactam or aminocarboxylic acid, preferably comprising 6 to 12 carbon atoms.

Preferably, the copolyamide comprises 40 to 60 mol% of repeating unit BACF, 10 to 25 mol% of repeating unit BACY$_1$, and 20 to 40 mol% of repeating unit Z.

The polyamide of the invention is preferably transparent, that is, it exhibits a transmittance of at least 80%, preferably 90% when measured in accordance with ASTM D1003-2011 on injection molded specimens of 2 mm thickness.

## Process of manufacture

The invention also concerns a process for the manufacture of the copolyamide above. The process comprises as a first step the synthesis of an amine end-capped oligomer containing the FDCA structure ("furane based" unit), further herein called "macro-diamine", and as a second step the synthesis of the copolyamide by melt polycondensation of the macrodiamine in presence of a dicarboxylic acid and further comonomers as appropriate.

More specifically, the process comprises the steps of:

(a) mixing at least one diamine $X_1$ with at least one diester of furandicarboxylic acid B to form a reaction mixture, the molar ratio between the diamine component $X_1$ and the diester component B in the reaction mixture being 1,1 or more;

(b) heating the reaction mixture obtained in step (a) to a temperature between 80 and 240°C to form an amine end-capped oligomer by melt polycondensation; and

(c) polymerizing the amine end-capped oligomer obtained in step (b) with at least one dicarboxylic acid $Y_1$ and optionally further monomers to form the amorphous copolyamide defined above.

Step (a) of the process

In step (a) of the process of the invention, the diamine component $X_1$ and diester component B are mixed to form a reaction mixture.

The diamine component $X_1$ is as described above with respect to the copolyamide.

The diester component B comprises at least one diester of 2,5-furandicarboxylic acid. Preferred such diesters include esters of aliphatic alcohols with 1 to 6, preferably 2 to 4 carbon atoms. Preferred alcohols have a boiling point of at most 160°C so as to allow easy recovery. Preferred such alcohols include methanol, ethanol, propan-1-ol, propan-2-ol, butan-1-ol, butan-2-ol, 2-methylpropan-1-ol, 2-methylpropan-2-ol, pentan-1-ol, pentan-2-ol, pentan-3-ol, 3-methylbutan-1-ol, 2-methylbutan-1-ol, 2,2-dimethylpropan-1-ol, 3-methylbutan-2-ol, 2-methylbutan-2-ol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, 2-ethylbutan-1-ol. Methanol, ethanol, propan-1-ol and butan-1-ol are particularly preferred.

While diester with different ester groups are not excluded, preferred diesters carry two identical ester groups. In particular, the diester of 2,5-furandicarboxylic acid may be chosen in the group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

The diester component B may comprise one or more diesters such as those mentioned above. Preferably, the diester component B consists of one or two diesters mentioned above.

According to the invention, the molar ratio of diamine component $X_1$ to diester component B in the reaction mixture is 1,1 or more. Preferably, the molar ratio is from 1,2 to 2, and even more preferably 1,3 to 2.

Preferably, the diamine component $X_1$ essentially consists of a single diamine $X_1$. Further preferably, the diester component B essentially consists of a single diester B.

The reaction mixture comprising the diamine component $X_1$ and the diester component B may optionally be diluted with a solvent. A minimum amount of solvent may be beneficial in particular in obtaining a homogeneous mixture of the monomers at ambient temperature. It is preferred that the solvent is the alcohol corresponding to the ester group in the FDCA diester. Preferably, the reaction mixture has a monomer concentration of at least 5 wt.%, preferentially at least 10 wt.% and most preferentially at least 20 wt.%.

Step (b) of the process

In step (b) of the process of the invention, the reaction mixture obtained in step (a) described above is heated to a temperature sufficient to form an amine end-capped oligomer by melt polycondensation.

In view to start or accelerate the reaction, one or more catalysts or other processing aids may be added if appropriate. Advantageously however, no catalyst is added.

Preferably, step (b) is conducted under a pressure of 1 atm absolute pressure or less. Further preferably, step (b) is conducted under an inert atmosphere, for instance under a nitrogen flow. Preferably, the reaction mixture is stirred.

The appropriate temperature for step (b) depends on the nature of the reactants. Generally, a temperature between 80 and 240°C, preferably 100 to 220°C, and in particular 100 to 200°C is suitable. It may be beneficial to heat the reaction mixture gradually, using for instance a heating rate of 1 to 5°C/min, preferably of 2 to 4°C/min. It may also be advantageous to conduct the reaction at increasing temperature levels.

Preferably, the alcohol formed during the reaction is removed along with eventual solvent, for instance using the nitrogen flow or by applying a vacuum.

The reaction time of the polycondensation reaction in step (b) to form the amine end-capped oligomer is rather short. Generally, a reaction time of 1 to 5 hours, preferably from 1,5 to 3 hours is sufficient.

Advantageously, the diamine end-capped prepolymer obtained may be used in step (c) without further purification step.

It has been observed that if the oligomer is obtained using a molar ratio between the diamine component $X_1$ and the diester component B of 1,1 to 2, secondary reactions are substantially reduced.

Accordingly, the diamine end-capped oligomer obtained in step (b) of the process of the invention can be used to prepare a furan-based amorphous copolyamide with a large molecular weight and a low polydispersity index.

Step (c) of the process

In step (c) of the process of the invention, the amine end-capped oligomer obtained in step (b) described above is polymerized with a dicarboxylic acid and other comonomers as appropriate to form a furan-based copolyamide. Preferably, the dicarboxylic acid and amine end-capped oligomer are present in the reaction mixture in an equimolar amount quantity.

Preferably, step (c) is carried out as a melt polycondensation.

In view to start or accelerate the reaction, one or more catalysts or other processing aids such as stabilizers may be added if appropriate. Advantageously, a catalyst is added. Catalysts for polyamide polymerization are known. Suitable catalysts are for example phosphoric, phosphorous and hypophosphorous acids and their salts. Catalysts and/or other processing aids may be added at levels not exceeding 8000 ppm, preferentially 2000 ppm and most preferentially 1000 ppm.

Preferably, the reaction is conducted in the presence of water, in order to facilitate melting of the mixture. Preferably, step (c) is conducted under a pressure of 1 atm absolute pressure or less. Further preferably, step (c) is conducted under an inert atmosphere, for instance under a nitrogen flow. Preferably, the reaction mixture is stirred.

The appropriate temperature for step (c) depends on the nature of the reactants. Generally however, a temperature of 200 to 300°C, preferably 220 to 290°C, in particular 240 to 290°C is suitable.

It is advantageous to remove the water formed from the reaction mixture as the reaction proceeds, for instance using the nitrogen flow or by applying a vacuum.

Generally, a reaction time of 1 to 6 hours, preferably from 1 to 5 hours, more preferably from 1 to 3 hours is sufficient.

According to an embodiment, step (c) is carried out in the presence of one or more further comonomers. The one or more further monomers may in particular be chosen in the group consisting of $X_a$, $Y_a$ and Z, as defined above.

In order to achieve a copolyamide with a suitable glass transition temperature, the comonomers and their molar content in the copolyamide may advantageously be selected so as to comply with the following relationship:

$$0,19 < \frac{\mathrm{mCH2}}{\mathrm{mUnit}} < 0,42$$

wherein:

- $m_{CH2}$ is the molecular weight of the sum of the methylene moieties present in the linear chains of the monomer, weighted by the molar content of the monomer in the copolyamide, and
- $m_{Unit}$ is the molecular weight of the repeating unit weighted by its molar content in the copolyamide.

Note that in the framework of this relationship, the term "monomer" is to be understood in the sense of "repeating unit". Hence, where a repeating unit is the combination of a diacid with a diamine, it is considered that the diamine.diacid pair (in an equimolar amount) corresponds to the monomer.

For example, a choice of monomers with a value of 0,23 will yield a copolyamide with a high glass transition temperature such as 170°C, whereas a choice of monomers with a value of 0,44 will yield a copolyamide with a low glass transition temperature such as 120°C.

The molar ratio of the repeating units of the copolyamide corresponds to the ratio of monomers introduced into the reaction mixture.

**Composition**

The invention further concerns a composition comprising the copolyamide of the invention.

Preferably, the composition comprises at least one additive. The additive may be chosen notably from antioxidants, antistatic agents, heat stabilizers, UV stabilizers, pigments, lubricants, mold release agents and dyes. Examples of pigments include titanium oxide and carbon black. The amount of additive is preferably from 0% to 5% by weight, and preferably from 0.2 to 4% based on the total weight of the composition.

Suitable antioxidants include notably sterically hindered phenols and phosphites.

The composition may further comprise at least one impact modifier.

Impact modifiers suitable include those based on ethylene-$\alpha$-olefin copolymers. Suitable impact modifiers in this category include ethylene-propylene copolymers, ethylene-1-butene copolymers, ethylene-octene copolymers or ethylene-propylene-1-butene copolymers.

The impact modifier may be notably a polyolefin functionalized with unsaturated carboxylic acids, carboxylic acid derivatives or glycidyl derivatives, either by copolymerization or by grafting.

For impact modifiers that are functionalized by copolymerization, the degree of functionalization (amount of unsaturated carboxylic acid or equivalent) in the copolymerized polyolefin is preferably from 3 to 25% by weight, preferably from 4 to 20% by weight, most preferably from 4,5 to 15% by weight, relative to the total weight of impact modifier.

For impact modifier that have been modified by grafting, the degree of grafting relative to the total weight of the impact modifier is preferably from 0,3 to 2,5% by weight, preferably from 0,4 to 2,0% by weight, particularly preferably from 0,5 to 1,9% by weight.

Core-shell impact modifiers may also be used. These impact modifiers take the form of multilayer polymer particles. The core of these particles is comprised of one polymer while the outer layer, the shell, is comprised of another polymer. The core polymer is preferably selected from the group comprising homopolymers and/or copolymers of isoprene, butadiene and vinyl monomers. The shell polymer preferably comprises homopolymers or copolymers containing either styrene molecules as the major component or methyl methacrylate as the major component with smaller amounts of functional acrylate comonomers.

The core-shell impact modifier preferably has a weight-average particle size of 20 - 500 nm.

The amount of impact modifier in the composition is preferably from 0 to 60% by weight, preferably from 5% to 55%, more particularly from 10 to 30% by weight based on the total weight of the composition.

The composition may further comprise a filler. Fillers can be particulate or fibrous. Fillers may also be either organic or inorganic. Suitable fillers for the invention include, but are not limited to, carbon fibers, aramid fibers, swellable clay minerals, mica, talc, PTFE powder, kaolin, quartz, graphite, silicates, boron fibers, glass fibers, glass flakes, hollow glass spheres, glass beads, calcium carbonate, carbon black, single-wall carbon nanotubes, multiwall nanotubes, graphene, graphite (expanded or non-expanded) and silica, fibrous reinforcing materials, flame retardants and flame retardant aids. Where fillers are used, these are to be selected in amounts appropriate and according to their intended use.

The amount of filler in the composition is preferably from 0 to 60% by weight, preferably from 5% to 55%, more particularly from 10 to 30% by weight based on the total weight of the composition.

It may be necessary to optimize the matching of refractive indices of additive and polymer in order to maintain transparency of the overall composition if a transparent composition is required. Furthermore, while the use of fillers may enhance the mechanical properties of the polymers, their use may be detrimental to the transparency of the material.

**Article**

The polyamide of the present invention can be processed into various molded articles by known molding methods such as injection molding, extrusion and blow molding.

The invention relates to an article comprising the said copolyamide or composition, in particular in at least one part or layer. Such an article may in particular be a molded object, a sheet, a profile, a tube, a hollow body. In particular, it may be a part of an optical equipment such as a filter, a lens, preferably an ophthalmic lens, a spectacle frame, an element with a spectral filter effect, a spectacle lens, a sunglass lens, an optical lens, an optical filter, an inspection lens; a part of sports equipment such as goggles, notably sports or ski goggles, sports shoes, golf equipment; a part of security equipment such as a visor, safety glasses, a part of electronic equipment such as storage media, optical recording systems, flow meter, displays, optical data storage, measuring devices, infrared keys, mobile phones, notably a mobile phone case, transportable recording devices, personal digital assistants; a housing or part thereof; a window in buildings or vehicles; a decorative element; a structural element; a part of a toy; a part of a cover or a covering; a part of a packaging; or a part of a plating.

In others words, the invention relates to an article comprising the said copolyamide or composition useful for the production of eyewear, lentils, electrical and electronic equipment, automobile equipment, chirurgical tools, packaging and sports articles,

**Use**

The present invention also relates to the use of the copolyamide of the invention as injection molding materials.

The invention finds particular use in the manufacture of a molded object, a sheet, a profile, a tube or a hollow body. a part of an optical equipment such as a filter, a lens, preferably an ophthalmic lens, a spectacle frame, an element with a spectral filter effect, a spectacle lens, a sunglass lens, an optical lens, an optical filter, an inspection lens; a part of sports equipment such as goggles, notably sports or ski goggles, sports shoes, golf equipment; a part of security equipment such as a visor, safety glasses, a part of electronic equipment such as storage media, optical recording systems, flow meter, displays, optical data storage, measuring devices, infrared keys, mobile phones, notably a mobile phone case, transportable recording devices, personal digital assistants; a housing or part thereof; a window in buildings or vehicles; a decorative element; a structural element; a part of a toy; a part of a cover or a covering; a part of a packaging; or a part of a plating.

The present invention will now described based on the following non limiting examples.

## Examples

Unless specified otherwise, all experiments were carried out under normal conditions, i.e., room temperature (25°C) and ambient pressure (1 atm).

Unless indicated otherwise, all percentages mentioned refer to percent by weight with respect to the weight of the final composition.

## Materials

DA10 (decanediamine): purity > 98% (from Arkema (Suzhou) Polyamide Co., Ltd).

1,3-BAC (1,4-bis(aminomethyl) cyclohexane): purity > 99%, (from Mitsubishi Gas Chemical)

DMFDCA (2,5-furandicarboxylic acid dimethylester): Purity> 98.5%, (from Hefei Leaf Biotech Co., Ltd.)

BMACM (bis(4-amino-3-methylcyclohexyl) methane): Purity> 99%, (from BASF)

IPA (Isophthalic acid): Purity> 99.8%, (from Eastman)

A11 (11-aminoundecanoic acid): Purity 97% (from Sigma Aldrich)

Hypophosphorous acid: 50 wt.% solution (from Sinopharm chemical reagent Co., Ltd).

## Test methods

### 1. Potentiometric titration

The alkalinity and acidity of the amine end-capped oligomer was determined by potentiometric titration using a Metrohm 905 potentiometric titrator.

For acid group titration, the amine end-capped oligomer was dissolved in 2-tert-butylphenol and titration was performed using a 0,02 mol/L of tetrabutyl ammonium solution.

For amine group titration, the amine end-capped oligomer was dissolved in m-cresol and titration was performed using a 0,02mol/L of perchloric acid solution.

The acid group content [COOH] (mmol/kg) determined can be used to calculate the hydrolysis rate of ester groups of DMFDCA, given in %, by formula (I) below:

$$Ester\ Hydrolysis\ Rate = \frac{(X \cdot M_{DA10} + M_{DMFDCA} - 2 \cdot M_{CH3OH})}{1000} \cdot \frac{A}{2000} \cdot 100\ \% \qquad (I)$$

wherein:

X represents the number of moles of diamine divided by the number of moles of DMFDCA used in the process (molar ratio);

$M_{DMFDCA}$ represents the molecular weight of DMFDCA (184,1 g/mol);

$M_{DA10}$ represents the molecular weight of the decanediamine (172,3 g/mol);

$M_{CH3OH}$ represents the molecular weight of methanol (32 g/mol); and

A represents the acid group content.

### 2. Size Exclusion Chromatography (SEC)

The weight average molecular weight (Mw) and number average molecular weight (Mn) were determined by size exclusion chromatography using a system e2695 Alliance from Waters. The polymers were dissolved in hexafluoroisopropanol (HFIP) and HFIP containing 0,05 M sodium trifluoroacetate was used as mobile phase. The conditions used are summarized below:

Carrier phase: HFIP

Detector: RI 2414
Column: PPS PFG analytical 100 Å + PPS PFG analytical 1000 Å
Standard: PMMA calibration kit M-M-10, PL2020-0101
Flow rate: 1 mL/min
Injected volume: 100 μL
Analysis time: 30 min

The polydispersity index (PDI) was calculated by dividing the weight average molecular weight (Mw) by the number average molecular weight (Mn).

### 3. Inherent Viscosity (IV)

The inherent viscosity (IV) of the polymers obtained was determined as indicated in ISO 307:2019 using an Ubbelohde viscosimeter, modified in that the concentration is 0,5 wt.% in m-cresol as a solvent and the temperature is 20°C.

### 4. Thermal Analysis

The melting temperature (Tm) and glass transition temperature (Tg) of the polymers obtained were measured by differential scanning calorimetry (DSC) following ISO 11357 - 3 :2018 and ISO 11357 - 2 : 2020. More specifically, the samples were heated under $N_2$ atmosphere from room temperature to 260°C at a heating rate of 20°C/min, followed by cooling to 0°C at a cooling rate of 20°C/min, and a second heating from 0 to 260°C at a heating rate of 20°C/min. The melting temperature and the glass transition temperatures were recorded during the second heating cycle.

### 5. Calculation of $m_{CH2}$ / $m_{Unit}$

As discussed above, the glass transition temperature of the copolyamides of the invention is likely to be within the claimed range if the ratio $m_{CH2}$ / $m_{Unit}$ lies between 0,19 and 0,44.

$m_{CH2}$ is the molecular weight of all linear methylene groups in the repeating units of the monomers, weighted by their molar content in the copolyamide;
$m_{CH2}$ = number of methylene groups present in the linear chains of the repeating units of the copolyamide $\times$ 14 $\times$ molar number of the repeating unit;
$m_{Unit}$ is the molecular weight of the repeating units weighted by their molar content in the copolyamide; and
$M_{Unit}$= molecular weight of the repeating unit x molar number of the repeating unit.

In 11/BACF/BACI:

Monomer 11-aminoundecanoic acid (A11) contains 10 methylene groups in the linear chain and has a molecular weight of 201,31 g/mol. The molecular weight of the resulting repeating unit 11 is 183,31 g/mol (201,31 - 18 g/mol), corresponding to the loss of one hydroxyl and one hydrogen (18 g/mol).
Monomer 1,4-bis(aminomethyl) cyclohexane (1,3-BAC) contains 2 methylene groups in the linear chain (methylene groups of the cyclohexane are not considered) and has a molecular weight of 142,2 g/mol. The molecular weight of the resulting repeating unit BAC is 140,2 g/mol (440,2 - 2 g/mol), corresponding to the loss of two hydrogens (2 g/mol).
Monomer 2,5-furandicarboxylic acid dimethylester (DMFDC) does not contain any methylene group and has a molecular weight of 184,15 g/mol. The molecular weight of the resulting repeating unit F is 122,15 g/mol (184,15 - 62 g/mol) corresponding to the loss of two methoxy groups (62 g/mol).
Monomer isophthalic acid (IPA) does not contain any methylene group and has a molecular weight of 166,14 g/mol. The molecular weight of the resulting repeating unit I is 132,14 g/mol (166,14 - 34 g/mol), corresponding to the loss of two hydroxyl (34 g/mol).

The copolyamide 11/BACF/BACI was obtained from these monomers in the amounts shown in the table 1 below.

**Table 1:** Monomers of copolyamide PA 11/BACF/BACI

|  | DMFDC | 1,3-BAC | IPA | A11 |
|---|---|---|---|---|
| Quantity (mol) | 0,27969 | 0,36135 | 0,08127 | 0,15165 |
| Mol fraction | 3,44 | 4,45 | 1,00 | 1,87 |

(continued)

|  | DMFDC | 1,3-BAC | IPA | A11 |
|---|---|---|---|---|
| $M_w$ (g/mol) | 184,15 | 142,2 | 166,14 | 201,31 |
| $M_w$ repeating unit | 122,15 | 140,2 | 132,14 | 183,31 |
| nCH2 | 0 | 2 | 0 | 10 |

The quantity of monomers reacted indicated in table 1 above, yields a molar monomer ratio in the copolyamide 11/BACF/BACI of 1,87/ 3,45 / 1,00.

$$\frac{m_{CH2}}{m_{Unit}} = \frac{1{,}866 \times 10 \times 14 + 4{,}446 \times 2 \times 14}{3{,}442 \times 122{,}15 + 4{,}446 \times 142{,}2 + 1{,}000 \times 166{,}14 + 1{,}866 \times 201{,}31}$$

$$\frac{m_{CH2}}{m_{Unit}} = \frac{35{,}9}{141{,}2} = 0{,}254$$

In 10F/10I/BI:

Monomer decanediamine (DA10) contains ten methylene groups in the linear chain and has a molecular weight of 172,31 g/mol. The molecular weight of the unit 10 is 170.31 g/mol, corresponding to the loss of two hydrogens (2 g/mol).

Monomer 2,5-furandicarboxylic acid dimethylester (DMFDC) does not contain any methylene group and has a molecular weight of 184,15 g/mol. The molecular weight of the repeating unit F is 122,15 g/mol, corresponding to the loss of two methoxy groups (62 g/mol).

Monomer isophthalic acid (IPA) does not contain any methylene group and has a molecular weight of 166,14 g/mol. The molecular weight of the unit I is 132,14 g/mol, corresponding to the loss of two hydroxyl (34 g/mol).

Monomer bis(4-amino-3-methylcyclohexyl) methane (BMACM) contains one methylene group in the linear chain and has a molecular weight of 238,41 g/mol. The molecular weight of the repeating unit B is 236,41 g/mol, corresponding to the loss of two hydrogens (2 g/mol).

**Table 2:** Monomers of copolyamide PA 10F/10I/BI

|  | DMFDC | DA10 | IPA | BMACM |
|---|---|---|---|---|
| Quantity [moles] | 0,18354 | 0,24925 | 0,20906 | 0,15426 |
| Mol fraction | 1,19 | 1,62 | 1,36 | 1,00 |
| $M_w$ | 184,146 | 172,31 | 166,14 | 238,41 |
| Mw repeating unit | 122,15 | 170,31 | 132,14 | 236,41 |
| nCH2 | 0 | 10 | 0 | 1 |

The copolyamide 10F/10I/BI was obtained from these monomers in the amounts shown in the table 2 above.
The quantity of monomers reacted indicated in table 2 above yield a molar ratio of the copolyamide 10F/10I/BI of 1,19/ 0,36/1,00.

$$\frac{m_{CH2}}{m_{Unit}} = \frac{1{,}62 \times 10 \times 14 + 1 \times 1 \times 14}{1{,}19 \times 122{,}15 + 1{,}62 \times 170{,}31 + 1{,}36 \times 132{,}14 + 1 \times 236{,}41}$$

$$\frac{m_{CH2}}{m_{Unit}} = \frac{46{,}7}{162{,}0} = 0{,}288$$

**Example A1**

**Amine end-capped oligomer 10F**

An amine end-capped oligomer 10F was synthesized as follows.

Into a glass tube were introduced 280,300 g of decanediamine (DA10) and 220,578 g of 2,5-furandicarboxylic acid dimethylester (DMFDC). The molar ratio between diamine and dicarboxylic acid dimethylester was 1,36.

The glass tube with the raw materials was then placed into an 1L autoclave equipped with an agitator. After removing the air in the autoclave by flushing 3 times with gaseous nitrogen, the autoclave was heated to 70°C within 20 minutes while keeping the reactants under inert nitrogen atmosphere and atmospheric pressure, and then kept at that temperature for 1 hour under agitation. Then the temperature was increased to 100°C while continuously distilling the methanol formed. In a final step, the temperature was raised to 160°C to form a homogeneous melt and kept at that temperature for 10 minutes to finalize the reaction.

The amine end-capped oligomer obtained was extracted from the autoclave as a yellowish solid and reduced to a powder with a hammer before further use.

The amine end-capped oligomer 10F thus obtained was characterized by potentiometric titration and 1H-NMR. The amine end-capped oligomer was found to have 1898 meq of amine end groups [NH$_2$], and 8 meq of carboxylic end groups [COOH]. The hydrolysis rate of the 2,5-furandicarboxylic acid dimethylester, calculated from the carboxylic terminal groups [COOH] content, was found to be 0,14%. The results are summarized in Table 3 below.

**Table 3:** Amine end-capped oligomer 10F A1

|  | 10F A1 |
|---|---|
| DA10 (g) | 280,300 |
| DMFDC (g) | 220,578 |
| Molar ratio Diamine / DMFDC | 1,36 |
| Tmax (°C) | 160 |
| [NH$_2$] (meq/ kg) | 1898 |
| [COO$_2$H] (meq/ kg) | 8 |
| Hydrolysis (%) | 0,14 |

The 10F oligomer may be synthesized as a totally biobased monomer. Indeed, 1,10-decanediamine may be obtained from castor oil and furan dicarboxylic acid may be derived from fructose.

**Example A2**

**Amine end-capped oligomer BACF**

An amine end-capped oligomer BACF was prepared as follows.

Into a glass tube were introduced 269,419 g of 1,3-bis(aminomethyl) cyclohexane (BAC) and 269,472 g of 2,5-furandicarboxylic acid dimethylester (DMFDC). The molar ratio between diamine and dicarboxylic acid dimethylester was 1,29.

The reaction mixture was then reacted as explained for Example A1 above except that 300 ml of methanol were added to improve mixing of the reactants, and the temperature was raised only to 70°C.

The BACF oligomer was characterized as explained for Example A1. The results are summarized in Table 4 below.

**Example A3**

**Amine end-capped oligomer BACF**

An amine end-capped oligomer BACF was prepared as follows.

Into a glass tube were introduced 300,189 g of 1,3-bis(aminomethyl) cyclohexane (BAC) and 300,793g of 2,5-furandicarboxylic acid dimethylester (DMFDC). The molar ratio between diamine and dicarboxylic acid dimethylester was 1,29.

The reaction mixture was then reacted as explained for Example A1 above except that 300 ml of methanol were added to improve mixing of the reactants, and the temperature was raised only to 70°C.

The BACF oligomer was characterized as explained for Example A1. The results are summarized in Table 4 below.

Table 4: Amine end-capped oligomers BACF A2 and A3

|  | BACF A2 | BACF A3 |
|---|---|---|
| 1,3-BAC (g) | 269,419 | 300,189 |
| DMFDC (g) | 269,472 | 300,793 |
| Molar ratio Diamine / DMFDC | 1,29 | 1,29 |
| Tmax (°C) | 70 | 70 |
| $[NH_2]$ (meq/ kg) | 1910 | 1875 |
| $[COO_2H]$ (meq/ kg) | 8 | 9 |
| Hydrolysis (%) | 0,12 | 0,14 |

**Example B1**

**Copolyamide PA 10F/10I/BI**

An FDCA-based copolyamide PA 10F/10I/BI was produced from the amine end-capped oligomer 10F A1 as follows.

Into a 600mL glass tube were introduced 44,574g of amine end-capped oligomer A1, 5,027g of bis (4- amino-3-methylcyclohexyl) methane (BMACM) diamine, 10,433g of isophthalic acid (IPA), 10g of water and 0,02g of hypophosphorous acid ($H_3PO2$).

The glass tube was capped with a three-necked lid, fitted with a mechanical agitator, and a nitrogen in and outflow. After removing the air by flushing with nitrogen for 20 minutes, a continuous nitrogen flow (150 ml/min) was passed through the tube while heating under stirring to T= 200°C within 30 min. Added water and water formed by the reaction was continuously removed from the reaction mixture in form of water vapor. After holding the temperature at T=200°C for 30 min, the tube was heated to T=260°C within 15 min, and this temperature was maintained for 40min before cooling to room temperature.

The transparent glassy copolymer obtained was characterized by its glass transition temperature Tg, inherent viscosity and average molecular weight. The results are summarized in table 5 below.

**Example B2**

**Copolyamide PA 10F/10I/BI**

An FDCA-based copolyamide PA 10F/10I/BI was produced from the amine end-capped oligomer 10F A1 as follows.

Into a 600mL glass tube were introduced 80,005g of amine end-capped oligomer A1, 25,133g of bis (4- amino-3-methylcyclohexyl) methane (BMACM) diamine, 28,976g of isophthalic acid (IPA), 10g of water and 0,02g of hypophosphorous acid ($H_3PO2$).

The reaction was carried out as explained in Example B1 above, with the exception that the reaction mixture was heated to a final temperature of 280°C.

The transparent glassy copolymer obtained was characterized by its glass transition temperature Tg, inherent viscosity and average molecular weight. The results are summarized in table 5 below.

**Example B3**

**Copolyamide PA 10F/10I/BI**

An FDCA-based copolyamide PA 10F/10I/BI was produced from the amine end-capped oligomer 10F A1 as follows.

Into a 600mL glass tube were introduced 65,001g of amine end-capped oligomer A1, 36,776g of bis (4- amino-3-methylcyclohexyl) methane (BMACM) diamine, 34,734g of isophthalic acid (IPA), 10g of water and 0,02g of hypophosphorous acid ($H_3PO2$).

The reaction was carried out as explained in Example B1 above, with the exception that the reaction mixture was heated to a final temperature of 285°C.

The transparent glassy copolymer obtained was characterized by its glass transition temperature Tg, inherent viscosity and average molecular weight. The results are summarized in table 5 below.

**Table 5:** Copolyamides B1 to B3

|  | B1 | B2 | B3 |
|---|---|---|---|
| 10F macrodiamine A1(g) | 44,574 | 80,005 | 65,001 |
| Mol macrodiamine | 0,07662 | 0,13753 | 0,11174 |
| mol DMFDC | 0,12586 | 0,22591 | 0,18354 |
| mol DA10 | 0,17092 | 0,30679 | 0,24925 |
| BAMCM (g) | 5,027 | 25,133 | 36,776 |
| Mol BMACM | 0,02109 | 0,10542 | 0,15426 |
| IPA (g) | 10,433 | 28,976 | 34,734 |
| Mol IPA | 0,06280 | 0,17441 | 0,20906 |
| calc charge $NH_2$/COOH | 1,018 | 1,030 | 1,028 |
| $NH_2$/COOH (mol/mol) | 1 | 1,019 | 1,019 |
| Molar ratio of PA10F/10I/BI | 6,0/2,0/1,0 | 2,14/0,65/1,0 | 1,19/0,36/1,0 |
| Final Temperature (°C) | 260 | 280 | 285 |
| IV (dL/g) | 0,87 | 0.92 | 0,88 |
| Tf(°C) | none | none | none |
| Tg (°C) | 121 | 146 | 161 |
| NH2 [meq/kg] | 24 | 20 | 25 |
| COOH [meq/kg] | 50 | 22 | 11 |
| Mn | 19411 | 33531 | 34011 |
| Mw | 51297 | 64903 | 67953 |
| PDI | 2,64 | 1,94 | 2,00 |
| $M_{CH2}$ / $m_{Unit}$ | 0,414 | 0,348 | 0,288 |

**Example B4**

**Copolyamide PA 11/BACF/BACI**

An FDCA-based copolyamide PA 11/BACF/BACI was produced from the amine end-capped oligomer BACF A2 as follows.

Into a 600mL glass tube were introduced 85,000g of amine end-capped oligomer A2, 13,655g of isophthalic acid (IPA), 40,374g of 11-aminoundecanoic acid (A11), 10g of water and 0,02g of hypophosphorous acid ($H_3PO2$).

The glass tube was capped with a three-necked lid, fitted with a mechanical agitator, and a nitrogen in and outflow. After removing the air by flushing with nitrogen for 20 minutes, a continuous nitrogen flow (150 ml/min) was passed through the tube while heating under stirring to T= 200°C within 30 min. Added water and water formed by the reaction was continuously removed from the reaction mixture in form of water vapor. After holding the temperature at T=200°C for 30 min, the tube was heated to T=285°C within 15 min, and this temperature was maintained for 40min before cooling to room temperature.

The transparent glassy copolymer obtained was characterized by its glass transition temperature Tg, inherent viscosity and average molecular weight. The results are summarized in table 6 below.

**Example B5**

**Copolyamide PA 11/BACF/BACl**

An FDCA-based copolyamide PA 11/BACF/BACl was produced from the amine end-capped oligomer BACF A2 as follows.

Into a 600mL glass tube were introduced 85,005g of amine end-capped oligomer A2, 13,502g of isophthalic acid (IPA), 30,502g of 11-aminoundecanoic acid (A11), 10g of water and 0,02g of hypophosphorous acid ($H_3PO2$).

The reaction was carried out as explained for Example B4 above.

The transparent glassy copolymer obtained was characterized by its glass transition temperature Tg, inherent viscosity and average molecular weight. The results are summarized in table 6 below.

**Example B6**

**Copolyamide PA 11/BACF/BACl**

An FDCA-based copolyamide PA 11/BACF/BACl was produced from the amine end-capped oligomer BACF A2 as follows.

Into a 600mL glass tube were introduced 85,002g of amine end-capped oligomer A2, 13,559g of isophthalic acid (IPA), 22,762g of 11-aminoundecanoic acid (A11), 10g of water and 0,02g of hypophosphorous acid ($H_3PO2$).

The reaction was carried out as explained for Example B4 above.

The transparent glassy copolymer obtained was characterized by its glass transition temperature Tg, inherent viscosity and average molecular weight. The results are summarized in table 6 below.

**Table 6:** Copolyamides B4 to B6

|  | B4 | B5 | B6 |
|---|---|---|---|
| BACF | A2 | A3 | A3 |
| BACF macrodiamine (g) | 85,000 | 85,005 | 85,002 |
| mol DMFDC | 0,2794 | 0,2797 | 0,2797 |
| mol BAC | 0,3616 | 0,3614 | 0,3613 |
| IPA (g) | 13,655 | 13,502 | 13,559 |
| mol IPA | 0,0822 | 0,0813 | 0,0816 |
| A11 (g) | 40,374 | 30,502 | 22,762 |
| mol A11 | 0,2007 | 0,1517 | 0,1132 |
| COOH/NH2 (mol/mol) | 1,02 | 1,03 | 1,03 |
| Mol ratio BACF/BACl/11 | 3,4 / 1,0 / 2,4 | 2,4 / 1,0 / 1,9 | 3,4 / 1,0 / 1,4 |
| Final Temperature (°C) | 285 | 285 | 285 |
| IV (dL/g) | 0,95 | 1,03 | 0,95 |
| Tf (°C) | none | none | none |
| Tg (°C) | 146 | 158 | 169 |
| $NH_2$ [meq/kg] | 20,1 | 20 | 19 |
| COOH [meq/kg] | 30,7 | 14 | 22 |
| Mn | 37858 | 46771 | 37858 |
| Mw | 79889 | 100867 | 79889 |
| PDI | 2,11 | 2,16 | 2,11 |
| $M_{CH2}$ / $m_{Unit}$ | 0,289 | 0,254 | 0,329 |

The copolyamides B1 to B6 are transparent glassy materials with high average molecular weight and an elevated glass transition temperature, which makes them useful as engineering resins, notably for injection molding.

**Claims**

1. Amorphous copolyamide comprising the repeating units of general formula (I):

$$X_1F / X_1Y_1 \qquad (I)$$

wherein:

- $X_1F$ is a repeating unit obtained from the polycondensation of a diamine $X_1$ with 4 to 18 carbon atoms and of F representing 2,5-furandicarboxylic acid,
- $X_1Y_1$ is a repeating unit obtained from the polycondensation of the diamine $X_1$ and of a dicarboxylic acid $Y_1$ with 4 to 18 carbon atoms,
the copolyamide having an inherent viscosity of more than 0,85 g/dl, preferably more than 0,90 g/dl and most preferably more than 0,95 g/dl, as measured according to ISO 307:2019 using an Ubbelohde viscosimeter, modified in that the concentration is 0,5 wt.% in m-cresol as a solvent and the temperature is 20°C,
the copolyamide having a glass transition temperature of between 115°C and 170°C,
as measured by differential scanning calorimetry (DSC) following ISO 11357-2: 2020 with a heating rate of 20°C/min.

2. Copolyamide according to claim 1, wherein the diamine $X_1$ represents a diamine comprising 4 to 18 carbon atoms based on a linear alkyl, branched alkyl or cycloaliphatic structure, and more preferably, $X_1$ represents a cycloaliphatic diamine comprising 5 to 18 carbon atoms.

3. Copolyamide according to any of the preceding claims, wherein the diacid $Y_1$ is chosen in the group consisting of, malonic acid, adipic acid, succinic acid, glutaric acid, 2,2-dimethyl-glutaric acid, 2,4,4-trimethyladipic acid, pimelic acid, suberic acid, azelaic acid, sebacic acid, undecanedioic acid, dodecanedioic acid, tetradecanedioic acid, cyclohexane-1,4-dicarboxylic acid, cyclohexane-1,3-dicarboxylic acid, isophthalic acid, terephthalic acid, 2,6-naphthalenedicarboxylic acid and phthalic acid.

4. Copolyamide according to any of the preceding claims, wherein it comprises at least one additional unit Z obtained from the polycondensation of a lactam or an aminocarboxylic acid.

5. Copolyamide according to claim 4, wherein Z is a lactam or an aminocarboxylic acid chosen in the group consisting of 6-aminohexanoic acid, 9-aminononanoic acid, 10-aminodecanoic acid, 10-aminoundecanoic acid, 12-aminododecanoic acid and 11-aminoundecanoic acid and its derivatives, caprolactam, decanolactam, undecanolactam and lauryllactam.

6. Copolyamide according to any of the preceding claims, wherein it comprises at least one additional unit $X_aY_a$, which is a repeating unit obtained from the polycondensation of a diamine $X_a$ with 4 to 18 carbon atoms and of a diacid $Y_a$ with 4 to 18 carbon atoms, the unit $X_aY_a$ being different from $X_1F$ and $X_1Y_1$.

7. Copolyamide according to claim 6, wherein the diamine $X_a$ is chosen among the diamines defined in claim 2 and the diacid $Y_a$ is chosen among the diacids defined in claim 3.

8. Copolyamide according to claim 6 or 7, wherein at least one of $X_1$ and $X_a$ is chosen in the group consisting of isophorone diamine, 1,3-diaminocyclohexane, 1, 4-diaminocyclohexane, 1,3-bis(aminomethyl) cyclohexane ("1,3-BAC"), 1,4-bis(aminomethyl) cyclohexane ("1,4-BAC"), bis(4-amino-3-methylcyclohexyl) methane ("BMACM" or "B") and bis(4-aminocyclohexyl) methane ("PACM" or "P"), or one or more aromatic diamines chosen in the group consisting of m-xylylene diamine (MXDA) and p-xylylene diamine (PXDA).

9. Copolyamide according to any of the preceding claims, wherein it has an index of polydispersity Ip, as determined by SEC, of less than 3,2, more preferably less than 2,8 and most preferably less than 2,6.

10. Process for the manufacture of an amorphous copolyamide as defined in any one of claims 1 to 9 comprising the steps of:

(a) mixing at least one diamine $X_1$ as defined in claims 1 and 2 with at least one diester of furandicarboxylic acid B to form a reaction mixture, the molar ratio between the diamine component $X_1$ and the diester component B in the reaction mixture being of 1,1 or more ;

(b) heating the reaction mixture obtained in step (a) to a temperature between 80 and 240°C to form an amine end-capped oligomer by melt polycondensation; and

(c) polymerizing the amine end-capped oligomer obtained in step (b) with at least one dicarboxylic acid $Y_1$ and optionally monomers Z, $Y_a$ and/or $Y_a$ to form the copolyamide as defined above.

11. Process for the manufacture according to claim 10, wherein the diester of 2,5-furandicarboxylic acid B is chosen in the group consisting of 2,5-furandicarboxylic acid dimethyl ester, 2,5-furandicarboxylic acid diethyl ester, 2,5-furandicarboxylic acid dipropyl ester and 2,5-furandicarboxylic acid dibutyl ester.

12. Composition comprising at least one copolyamide defined in any of claims 1 to 9 and from 0 to 5% by weight, preferably from 0,2% to 4% by weight based on the total weight of the composition of at least one additive.

13. A molded article made of the copolyamide defined in any one of claims 1 to 10 or made of the composition defined in claim 12.

14. A molded article according to claim 13, wherein it is a part of an optical equipment such as a filter, a lens, preferably an ophthalmic lens, a spectacle frame, an element with a spectral filter effect, a spectacle lens, a sunglass lens, an optical lens, an optical filter, an inspection lens; a part of sports equipment such as goggles, notably sports or ski goggles, sports shoes, golf equipment; a part of security equipment such as a visor, safety glasses, a part of electronic equipment such as storage media, optical recording systems, flow meter, displays, optical data storage, measuring devices, infrared keys, mobile phones, notably a mobile phone case, transportable recording devices, personal digital assistants; a housing or part thereof; a window in buildings or vehicles; a decorative element; a structural element; a part of a toy; a part of a cover or a covering; a part of a packaging; or a part of a plating.

15. Use of the copolyamide defined in any of claims 1 to 8 or the composition defined in claim 12 as injection molding material.

**Fig. 1**

Europäisches
Patentamt
European
Patent Office
Office européen
des brevets

# EUROPEAN SEARCH REPORT

**Application Number**

EP 24 30 6370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 174 708 B1 (DUPONT IND BIOSCIENCES USA LLC [US]) 15 July 2020 (2020-07-15) * page 9, par. 0079 ; pages 13-14, par. 0119, 0128 ; page 16, par. 0153 ; pages 20-21, par. 0177, table 4, ex. 8 and table 5, ex. 6, 8, 10. * | 1-15 | INV. C08G69/26 C08G69/36 C08G69/40 C08L77/02 C08L77/06 C08G69/28 |
| X | US 2016/145388 A1 (CHISHOLM BRET JA [US] ET AL) 26 May 2016 (2016-05-26) * page 1, par. 0006, chemical structure; page 2, par. 0010; page 5, par. 0048, table 1, ex. 70% FDCA/NDA-co-30% TA/NDA ; page 8, table 6, 70% FDCA/NDA-co-30% TA/NDA * | 1-3,7,9, 12,13,15 | |
| X | US 2023/123904 A1 (YANG JIE [CN] ET AL) 20 April 2023 (2023-04-20) * pages 1-4, par. 0003-4, 0033-34, 0037-38, table 1, ex. 3 and 5 ; claims 1-6 * | 1,2,9-12 | |

**TECHNICAL FIELDS SEARCHED (IPC)**

C08G
C08L

The present search report has been drawn up for all claims

| Place of search | Date of completion of the search | Examiner |
|---|---|---|
| Munich | 8 January 2025 | Stefaniu, Cristina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6370

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | | | Publication date | Patent family member(s) | | Publication date |
|---|---|---|---|---|---|---|
| EP | 3174708 | B1 | 15-07-2020 | CN | 106536187 A | 22-03-2017 |
| | | | | EP | 3174708 A1 | 07-06-2017 |
| | | | | EP | 3736128 A1 | 11-11-2020 |
| | | | | JP | 7278709 B2 | 22-05-2023 |
| | | | | JP | 7288021 B2 | 06-06-2023 |
| | | | | JP | 2017524576 A | 31-08-2017 |
| | | | | JP | 2022000352 A | 04-01-2022 |
| | | | | JP | 2023109928 A | 08-08-2023 |
| | | | | KR | 20170037966 A | 05-04-2017 |
| | | | | KR | 20230006002 A | 10-01-2023 |
| | | | | US | 2017210851 A1 | 27-07-2017 |
| | | | | US | 2020247953 A1 | 06-08-2020 |
| | | | | US | 2022111618 A1 | 14-04-2022 |
| | | | | US | 2024083140 A1 | 14-03-2024 |
| | | | | WO | 2016019267 A1 | 04-02-2016 |
| US | 2016145388 | A1 | 26-05-2016 | EP | 3010954 A1 | 27-04-2016 |
| | | | | US | 2016145388 A1 | 26-05-2016 |
| | | | | WO | 2014205358 A1 | 24-12-2014 |
| US | 2023123904 | A1 | 20-04-2023 | CN | 113429569 A | 24-09-2021 |
| | | | | US | 11643502 B1 | 09-05-2023 |
| | | | | WO | 2023000871 A1 | 26-01-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9938376 B

- US 2018371167 A

**Non-patent literature cited in the description**

- **VAN KREVELEN** ; **NIJENHUIS**. Properties of polymers, their correlation with chemical structure, their numerical estimation and prediction from additive group contributions. Elsevier, 2009